# EUROPEAN PATENT APPLICATION

(11) **EP 4 832 473 A1**
(43) Date of publication of application: **28.10.2026**
(21) Application number: 26173232.5
(22) Date of filing: 20.04.2026
(51) Int. Cl.: H04N 1/44, G06F 3/12

(54) **COMMUNICATION APPARATUS AND CONTROL METHOD FOR COMMUNICATION APPARATUS**

(30) Priority: 25.04.2025 JP 2025073707
(71) Applicant: Sharp Kabushiki Kaisha, Sakai City, Osaka 590-8522 (JP)
(72) Inventor: MASUDA, Akitoshi, Osaka, 590-8522 (JP)
(74) Representative: Müller Hoffmann & Partner

(57) **Abstract**

A communication apparatus, comprising: one or more controllers configured to: control enabling or disabling of a predetermined function; execute the predetermined function by performing communication via one or more ports set for the predetermined function; and collectively set the one or more ports to be used for executing the predetermined function when the predetermined function is enabled.

## Description

### BACKGROUND OF THE INVENTION

### Field of the Invention

The present disclosure relates to a communication apparatus and the like.

### Description of the Background Art

For example, Japanese Unexamined Patent Application Publication No. 2017-098805 describes a user interface that clearly indicates an item to be changed in accordance with a change in a setting value, and collectively reflects or collectively discards a plurality of input setting values.

An object of the present disclosure is to provide a communication apparatus and the like capable of efficiently enabling a function that a user wants to use.

### SUMMARY OF THE INVENTION

In order to solve the above-described problems, a communication apparatus according to the present disclosure comprises: one or more controllers configured to: control enabling or disabling of a predetermined function; execute the predetermined function by performing communication via one or more ports set for the predetermined function; and collectively set the one or more ports to be used for executing the predetermined function when the predetermined function is enabled.

Further, a control method for a communication apparatus according to the present disclosure is a control method for a communication apparatus that executes a predetermined function by performing communication via one or more ports set for the predetermined function, wherein, collectively setting the one or more ports to be used for executing the predetermined function when the predetermined function is enabled.

According to the present disclosure, a communication apparatus and the like capable of efficiently enabling a function that a user wants to use can be provided.

### BRIEF DESCRIPTION OF THE DRAWINGS

FIG. 1 is a diagram illustrating an overall configuration of an image forming apparatus according to a first embodiment.
FIG. 2A is a diagram illustrating a device configuration of the image forming apparatus according to the first embodiment.
FIG. 2B is a diagram illustrating a device functional configuration of the image forming apparatus according to the first embodiment.
FIG. 3 is a table for explaining correspondence between function executors usable in the image forming apparatus according to the first embodiment and port settings necessary for using the function executors.
FIG. 4 is a diagram illustrating a configuration example of an initial setting wizard screen according to the first embodiment.
FIG. 5 is a flowchart illustrating a flow of processes according to the first embodiment.
FIG. 6 is a flowchart illustrating a flow of processes according to the first embodiment.
FIG. 7 is a diagram illustrating an operation example according to the first embodiment.
FIG. 8 is a diagram illustrating an operation example according to the first embodiment.
FIG. 9 is a diagram illustrating an operation example according to the first embodiment.
FIG. 10 is a diagram illustrating an operation example according to the first embodiment.
FIG. 11 is a diagram illustrating an operation example according to the first embodiment.
FIG. 12 is a diagram illustrating an operation example according to the first embodiment.
FIG. 13 is a diagram illustrating an operation example according to the first embodiment.
FIG. 14 is a diagram illustrating an operation example according to the first embodiment.
FIG. 15 is a diagram illustrating an operation example according to the first embodiment.
FIG. 16 is a diagram illustrating an operation example according to the first embodiment.
FIG. 17 is a diagram illustrating an operation example according to the first embodiment.
FIG. 18 is a diagram illustrating an operation example according to the first embodiment.
FIG. 19 is a diagram illustrating an operation example according to the first embodiment.
FIG. 20A is a diagram illustrating an operation example according to the first embodiment.
FIG. 20B is a diagram illustrating an operation example according to the first embodiment.
FIG. 21A is a diagram illustrating an operation example according to the first embodiment.
FIG. 21B is a diagram illustrating an operation example according to the first embodiment.
FIG. 22 is a diagram illustrating an operation example according to the first embodiment.
FIG. 23A is a diagram illustrating an operation example according to a second embodiment.
FIG. 23B is a diagram illustrating an operation example according to the second embodiment.

### DESCRIPTION OF THE PREFERRED EMBODIMENTS

For example, with the development of laws for security enhancement such as Cyber Resilience Act, EU Radio Equipment Directive 2014/53/EU (RED), the IoT cyber security improvement law, and the like, a communication apparatus introduced into a market of an area or a country to which these legal regulations are applied may be required to set the port for communication that identify an application, a service, or the like operating in the communication apparatus to be disabled (initialized) so that the application, the service, or the like does not erroneously operate by a power-on operation or the like at the time of initial activation.

In the present disclosure, an application and a service provided by the operation of the application may be referred to as a "function", and an agent of operation of the function may be referred to as a "function executor" for convenience of description.

Therefore, in order to enable these functions, the administrator user or the like needs to set the port used by the function executor related to the desired function from the disabled state to the enabled state at the time of initial installation of the communication apparatus or at an arbitrary timing after the start of use. In the present disclosure, an operation of setting a port from a disabled state to an enabled state may be simply referred to as "port setting".

In general, a technique is known in which it is determined whether or not a function related to a changed setting value exists, and when the function exists, inputs of a plurality of setting values to be changed are continuously received, and the plurality of received setting values are collectively set.

However, in a configuration in which the settings of ports to be changed are continuously received for a function executor in which one or more ports are set to a disabled state as a part of security measures, the user needs to accurately grasp the port settings necessary for enabling the function, and there is a possibility that a desired function cannot be enabled when an erroneous port setting is performed.

In the present disclosure, a communication apparatus and the like capable of efficiently enabling a function that a user wants to use are realized by the following embodiments.

Hereinafter, embodiments of the present disclosure will be described with reference to the drawings. In the present disclosure, for example, a multifunction peripheral capable of implementing jobs related to copying, faxing, e-mail transmission, and the like, in a single housing will be described as one form of an image forming apparatus including a communication apparatus according to the present disclosure. It should be noted that the embodiments below are presented as examples for describing the present disclosure, and the technical scope of the description as recited in the appended claims is not limited by the following description.

### 1. First Embodiment

### 1.1 Functional Configuration

In the first embodiment, a selection screen for receiving selection of a predetermined function that a user desires to enable is displayed as a wizard screen (an initial setting screen at the time of initial setting) related to an initial setting wizard, and one or more ports used in a function executor related to the function received via the wizard screen are collectively set. Here, the function executor executes a predetermined function by performing communication via one or more set ports.

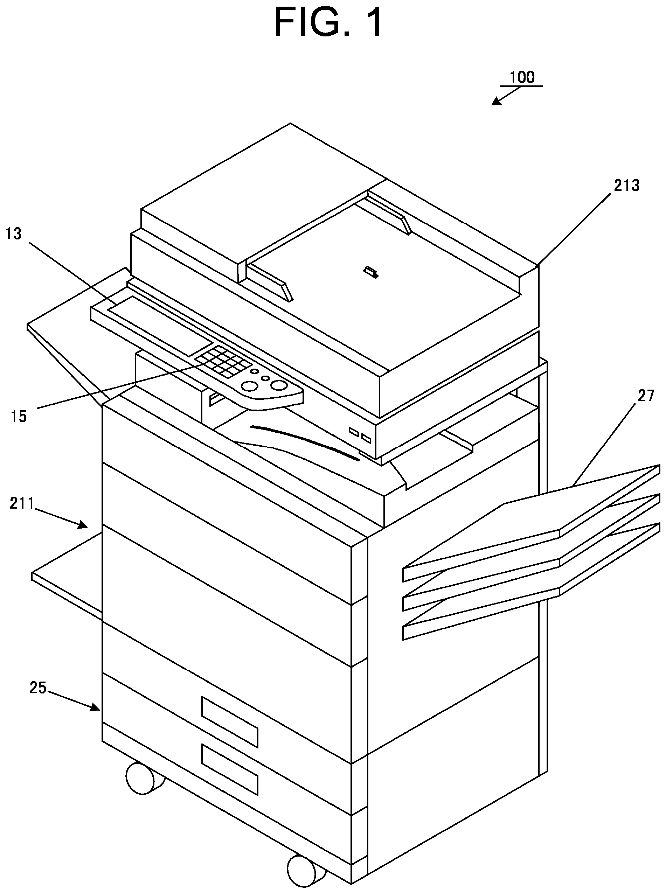

FIG. 1 is a diagram illustrating an overall configuration of an image forming apparatus 100 in which a communication apparatus 103 according to a first embodiment is mounted. In the first embodiment, as an example of the image forming apparatus 100, a form of a multifunction peripheral will be described. However, the form of the image forming apparatus 100 is not particularly limited as long as the image forming apparatus 100 has a configuration in which the communication apparatus 103 according to the first embodiment is mounted. For example, the image forming apparatus 100 may be a printer, a copying machine, a fax device, or the like, whose function is limited to each type of the job function.

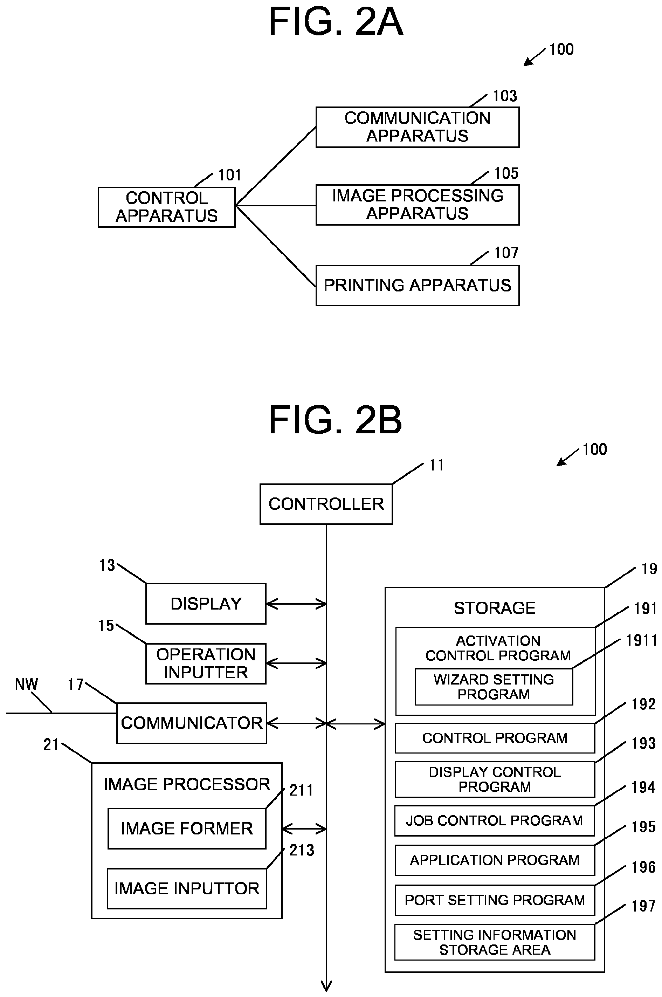

FIG. 2A is a diagram illustrating a device configuration of the image forming apparatus 100. The image forming apparatus 100 includes a control apparatus 101, the communication apparatus 103, an image processing apparatus 105, and a printing apparatus 107. Each of the apparatuses indicated in FIG. 2A may be integrally formed or may be configured by combining a plurality of apparatuses. For example, the image processing apparatus 105 and the printing apparatus 107 may be composed as a single apparatus.

FIG. 2B is a diagram illustrating an apparatus functional configuration of the image forming apparatus 100. Each of the apparatuses illustrated in FIG. 2A may have the apparatus function illustrated in FIG. 2B as necessary.

As the functional configuration, the image forming apparatus 100 is provided with a controller 11, a display 13, an operation inputter 15, a communicator 17, a storage 19, and an image processor 21.

The controller 11 controls the image forming apparatus 100 as a whole. The controller 11 may be composed of one or more processing apparatuses (for example, a central processing unit (CPU), a System on Chip (SoC), and the like). The controller 11 achieves the function of the apparatus by reading and executing various programs stored in the storage 19.

The display 13 is a display device that displays various types of information to a user or the like. The display 13 may be composed of, for example, a liquid crystal display (LCD), an organic electro-luminescence (EL) display, or the like. The display 13 displays a setting screen related to an initial setting wizard, a contract agreement screen, or the like in addition to displaying a home screen (not illustrated) and an operation screen such as a setting screen related to execution of each job.

The operation inputter 15 is an input device that receives input of information by a user or the like. The operation inputter 15 can be composed of, for example, various input devices such as operation keys including hardware keys and software keys, and buttons. The operation inputter 15 can also be configured as a touch panel that enables input via the display 13. When the operation inputter 15 is configured as a touch panel, the operation inputter 15 can detect the touch, tap, swipe operation, and the like conducted by a user on an object that is displayed via the display 13, and acquire coordinate information and pressure-sensitive information, etc., on the touch panel. In this case, as an input method of the touch panel, for example, a general input method such as a resistive film method, an infrared method, an electromagnetic induction method, or a capacitance method can be adopted.

The communicator 17 includes, for example, one or both of a wired interface and a wireless interface for communicating with another terminal device (not illustrated) via a network NW such as a local area network (LAN), a wide area network (WAN), the Internet, a telephone line, or a FAX line. In addition, the communicator 17 may include, for example, an interface related to a wireless communication technology such as Bluetooth (Registered Trademark), near field communication (NFC), Wi-Fi (Registered Trademark), ZigBee (Registered Trademark), infrared data association (IrDA), or wireless universal serial bus (USB).

The storage 19 is one or more storage devices that store therein various programs necessary for the operation of the image forming apparatus 100 and various kinds of data. The storage 19 may be composed of, for example, a storage device such as a random-access memory (RAM), a solid state drive (SSD), a hard disk drive (HDD), or a read-only memory (ROM).

In the first embodiment, the storage 19 stores an activation control program 191, a control program 192, a display control program 193, a job control program 194, an application program 195, and a port setting program 196, and secures a setting information storage area 197.

The activation control program 191 is a program read by the controller 11 at the time of activating the image forming apparatus 100. The controller 11 that has read the activation control program 191 controls the activation processing of the image forming apparatus 100. The activation control program 191 as described above may be included in, for example, boot firmware or main firmware that is activated on the basis of verification by the boot firmware. In order to realize the secure boot, the activation control program 191 may be stored in another storage device (storage area) (not illustrated) different from the storage 19, or may be stored in another terminal device (not illustrated) on the network NW.

The activation control program 191 includes a wizard setting program 1911. The controller 11 reads the wizard setting program 1911 when an activation timing of the image forming apparatus 100 corresponds to a timing at which initial setting is necessary to be made, such as when the image forming apparatus 100 is activated for the first time after the image forming apparatus 100 has been powered on (i.e., at the time of initial activation) or when activated for the first time after the storage 19 has been initialized.

The controller 11 that has read the wizard setting program 1911 sets a setting screen to be described later or a plurality of setting screens as an interface for the initial setting wizard in accordance with, for example, a preset deployment destination (place of destination) of the image forming apparatus 100. (In the present disclosure, a setting screen that functions as the initial setting wizard and can assist a user with the apparatus setting and receive input of the apparatus setting is referred to as a wizard screen).

The control program 192 is a program that is read by the controller 11 after the activation of the device based on the activation control program 191. The controller 11 that has read the control program 192 functions as an operating system (OS), and controls driving of the hardware such as the display 13, the operation inputter 15, the communicator 17, and the image processor 21. At this time, the controller 11 controls the driving of the image forming apparatus 100 on the basis of the initial setting (apparatus setting) received via the wizard screen.

The display control program 193 is a program read by the controller 11 when an output control of an operation screen or the like displayed by the display 13 or by the operation inputter 15 configured as a touch panel is performed. The controller 11 that has read the display control program 193 controls the display of the wizard screen or the like.

The job control program 194 is a program read by the controller 11 when a printing job related to printing or copying, or a job related to fax or image transmission is executed. The controller 11 that has read the job control program 194 proceeds to a job mode (a print mode, a copy mode, a fax mode, or an image transmission mode, etc.) for executing each job, and executes the job. When the job is executed, the controller 11 can display, on the touch panel, an operation screen for receiving input of a setting value necessary for the execution of the job from the user as necessary. The controller 11 can execute the job on the basis of the setting value received via the operation screen.

The application program 195 is a program that can operate as a function executor (application) that implements a predetermined function by being read by the controller 11. In the present disclosure, Web pages/Web services, printers (printing from PC, AirPrint (registered trademark), Universal Print, Print Release), global address search, fax/image transmission (E-mail, FTP, shared folder), and Open System Architecture (OSA) that conduct communication based on the set port (port setting) according to TCP/IP protocol will be described as an example of the function executor operating in the image forming apparatus 100, and port settings in the function executor will be described. The OSA is a function of causing the image forming apparatus 100 and business application software (external application) to cooperate with each other via a network.

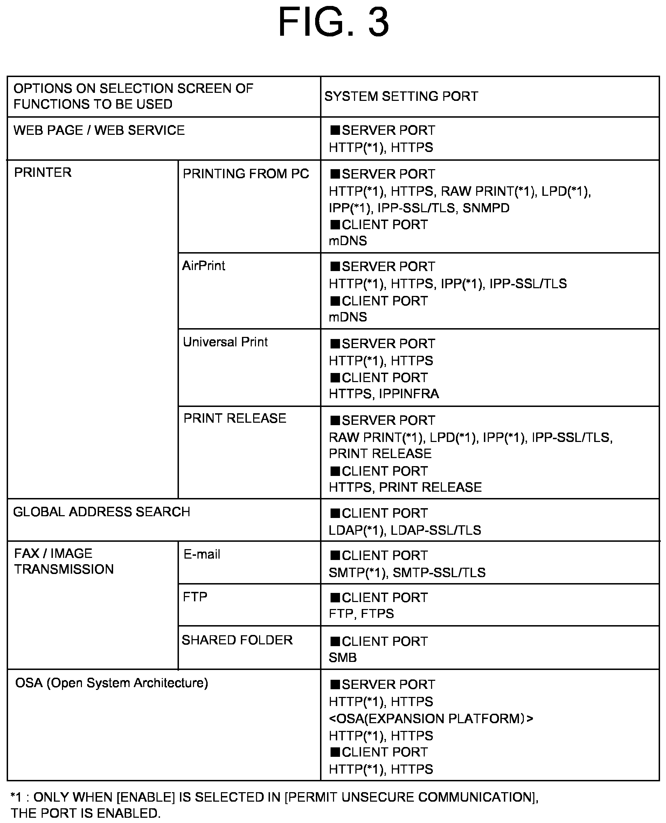

FIG. 3 is a table for explaining correspondence between function executors usable in the image forming apparatus 100 and port settings necessary for using the function executors.

In FIG. 3, usable function executors are shown in the left column of the table (options on the selection screen of functions to be used), and port settings necessary for using the function executors are shown in the right column of the table (ports for system settings).

For example, the table indicates that, in a case in which the function that the user desires to use is "web page/web service", the port settings necessary for using the function executor are HTTP (*1) and HTTPS. Note that the port (protocol) indicated by (*1) is a port that is enabled (to be collectively set) when [permit unsecure communication] is set to [enabled] by the user on a screen for enabling a function to be used described below.

Further, the table indicates that, for example, when a function that the user desires to use is "printing from PC" of the printer, the server-side port settings (server ports) necessary for using the function executor are HTTP (*1), HTTPS, Raw print (*1), LPD (*1), IPP (*1), IPP-SSL/TLS, and SNMPD, and the client-side port setting (client port) is mDNS.

Further, the table indicates that, in a case in which the function that the user desires to use is "print release" of the printer, the server ports necessary for using the function executor are Raw print (*1), LPD (*1), IPP (*1), IPP-SSL/TLS, and print release, and the client ports are HTTPS and print release. The "print release" is a function that, in a case in which there are a plurality of apparatuses corresponding to the print release function on the same network, when print data is stored in an image forming apparatus set as a parent apparatus (a plurality of apparatuses can be set), the print data stored in the parent apparatus can be printed from an image forming apparatus set as a child apparatus (a plurality of apparatuses can be set).

Furthermore, for example, the table indicates that, in a case in which the function that the user desires to use is "global address search", the port settings necessary for using the function executor are LDAP (*1) and LDAP-SSL/TLS.

Further, the table indicates that, in a case in which the function that the user desires to use is "E-mail" of the fax/image transmission, the port settings necessary for using the function executor are SMTP (*1) and SMTP-SSL/TLS for the client port.

Further, the table indicates that, in a case in which the function that the user desires to use is "Open System Architecture (OSA)", the port settings necessary for using the function executor are HTTP (*1) and HTTPS for the server port, and HTTP(* 1) and HTTPS for the client port.

Referring back to FIG. 2, the port setting program 196 is a program read by the controller 11 when a port is set for using a function executor. The controller 11 that has read the port setting program 196 sets the port for using the function executor in accordance with the selection of the function executor by the user. As illustrated in FIG. 3, when one or more port settings necessary for using the function executor are included, the controller 11 collectively performs these port settings.

The setting information storage area 197 is a storage area that stores setting information described in a table, a database, a JSON format, or the like indicating a correspondence relationship between the usable function executors illustrated in FIG. 3 and port settings necessary for using the function executors, screen information such as a wizard screen at the time of initial setting, apparatus setting information including initial setting for normally operating the image forming apparatus 100, and setting information such as job setting information related to job execution.

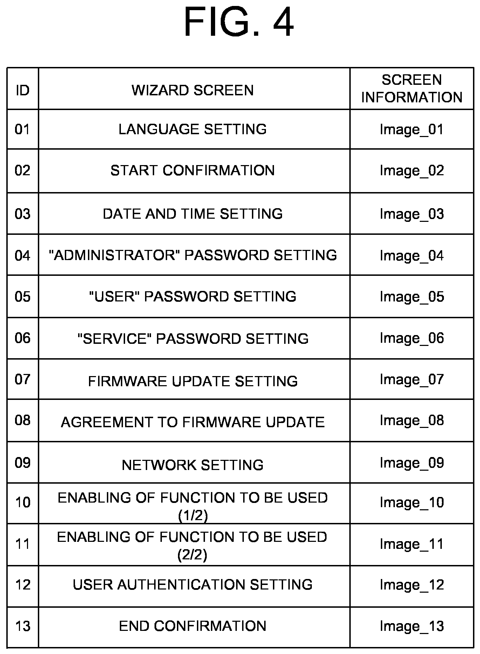

Here, a configuration example of the wizard screen displayed as an initial setting wizard according to the present disclosure will be described with reference to a table of FIG. 4.

In the description of the present disclosure, it is assumed that the initial setting wizard progresses using the wizard screen identified by the ID shown in the table of FIG. 4. Further, although the order of displaying of the wizard screens may be arbitrary, when the apparatus settings received via the respective wizard screens have an in-context relationship, it is preferable that the wizard screens are displayed in a predetermined displaying order in accordance with the progress of the initial setting wizard. Further, wizard screens whose screen attributes, such as the purpose, use, image size, and resolution, are common to each other are classified into one or more screen groups, and the user is prompted to make the necessary initial setting for each screen group.

The table illustrated in FIG. 4 includes an ID, a wizard screen, and screen information. The ID is an identifier for uniquely identifying the wizard screen. The wizard screen represents assistance that the wizard screen is to provide and an apparatus setting that is to be input on the wizard screen. The screen information indicates screen information that constitutes the wizard screen. FIG. 4 exemplifies an initial setting wizard composed of thirteen wizard screens in total that are respectively identified as ID "01" to ID "13".

An ID "01" is a wizard screen related to language setting, and is a screen for receiving setting of a language used in the image forming apparatus 100. The language set in the language setting is used as a display language of various screens displayed on the image forming apparatus 100 in addition to a wizard screen related to the subsequent initial setting wizard. The ID "02" is a start confirmation screen for receiving an agreement instruction to agree to start the initial setting wizard.

The wizard screens related to ID "03" to ID "06" represent a group of wizard screens that receive the essential apparatus settings to comply with various legal regulations. The screen group can include a date and time setting screen of ID "03", an "administrator" password setting screen, a "user" password setting screen, a "service" password setting screen, and the like. Note that some of these screens (the date and time setting screen, the "service" password setting screen, and the like) may be displayed only when the deployment destination (place of destination) of the image forming apparatus 100 is a specific place of destination such as a country or an area under the system of the Security Enforcement Act.

The wizard screens related to ID "07" to ID "08" represent a group of wizard screens that receive the recommended apparatus settings to comply with various legal regulations. The screen group may include a screen for receiving firmware update setting of ID "07", a screen for an agreement instruction to agree to the firmware update of the ID "08", and the like.

The wizard screens related to ID "09" to ID "11" represent a group of wizard screens that receive one or more apparatus settings necessary for the user to use the image forming apparatus 100 (communication apparatus 103). The screen group can include, in addition to the screen for the network setting of ID "09", a screen for enabling a function to be used (1/2) of ID "10", a screen for enabling a function to be used (2/2) of ID "11", and the like as selection screens for receiving a selection instruction of a function desired to be used. Note that the screen group may be displayed only when the deployment destination (place of destination) of the image forming apparatus 100 is a specific place of destination such as a country or an area under the system of the Security Enforcement Act.

The wizard screen of ID "12" is a wizard screen for receiving a setting instruction to enable or disable the user authentication function of the image forming apparatus 100, and the wizard screen of ID "13" is an end confirmation screen for receiving an agreement instruction to agree to end the initial setting wizard. Note that the wizard screen that receives a setting instruction for enabling or disabling the user authentication function of ID "12" may be displayed only when the deployment destination (place of destination) of the image forming apparatus 100 is a specific place of destination such as a country or an area under the system of the Security Enforcement Act.

The controller 11 that has read the activation control program 191 (wizard setting program 1911) provides the user with the initial setting wizard via the wizard screens exemplified in FIG. 4.

Referring back to FIG. 2, the image processor 21 includes an image former 211 and an image inputter 213. The image former 211 supplies a paper sheet from a paper feeder 25, forms an image based on image data on the paper sheet, and then discharges the paper sheet to a paper discharger 27. The image former 211 may be composed of, for example, a laser printer and the like employing an electrophotographic system. In this case, the image former 211 forms images by using toner supplied from toner cartridges (not illustrated) corresponding to toner colors (for example, cyan, magenta, yellow, and black).

The image inputter 213 generates image data by scanning a document. The image inputter 213 can be configured as a scanner device including, in addition to an image sensor such as a charge coupled device (CCD) or a contact image sensor (CIS), an automatic document feeder (ADF), a flatbed for placing and reading a document, and the like. The configuration of the image inputter 213 is not particularly limited as long as a reflected light image from a document image can be read by the image sensor. Note that the image inputter 213 may also be configured as an interface capable of acquiring, for example, image data stored in a storage medium such as a USB memory or image data transmitted from a terminal device (not illustrated). The image processor 21 may perform, for example, shading correction and density correction on the image data input from the image inputter 213 to generate image data for image transmission.

The above-described apparatus functions may be provided in a duplicated manner when the control apparatus 101, the communication apparatus 103, the image processing apparatus 105, and the printing apparatus 107 individually implement those apparatus functions. For example, each of the communication apparatus 103, the image processing apparatus 105, and the printing apparatus 107 may include the controller 11 and the storage 19. Alternatively, the respective apparatuses may share and use the controller 11, the storage 19, and the like.

### 1.2 Processing Flow

### 1.2.1 Regarding Processing Related to Initial Setting Wizard

The image forming apparatus 100 according to the present disclosure is configured to display a wizard screen on the display 13 (operation inputter 15) when the image forming apparatus 100 is powered on in a factory shipment state, and to prohibit the other operations from being performed until the initial setting wizard is ended. Such a configuration is adopted in order to prohibit the use of the function of the image forming apparatus 100 until the essential settings required by the legal regulations are completed.

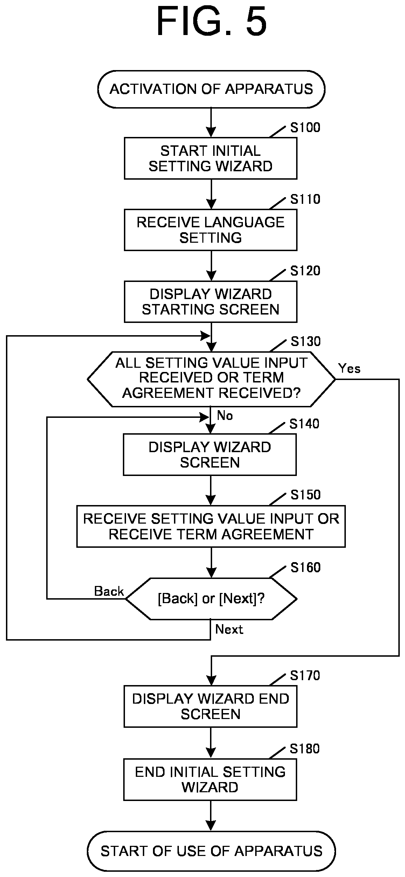

An example of processing related to the initial setting wizard as described above will be described with reference to a flowchart of FIG. 5 and FIG. 4. The flowchart illustrated in FIG. 5 is the processing executed when the controller 11 reads the activation control program 191 (wizard setting program 1911), the control program 192, the display control program 193, and the like.

After the image forming apparatus 100 has been activated, the controller 11 reads the activation control program 191 (wizard setting program 1911), and thereby the initial setting wizard is started (step S100).

The controller 11 receives the language setting made by the user via the "language setting" wizard screen of ID "01" (step S110). This is performed to receive selection of the language that can be understood by the user who executes the initial setting wizard.

The controller 11 starts the display of subsequent wizard screens from the wizard screen related to ID "02" based on the received language (step S120).

Next, the controller 11 determines whether or not the reception of the input of all the setting values from the user is completed or the reception of the agreement to the terms from the user is completed (step S130). In a case in which it is determined that the reception of the input of all the setting values or the reception of the agreement to the terms has not been completed, the controller 11 displays the wizard screen (step S130; No → step S140). In this case, the controller 11 can set the wizard screen to be displayed by specifying the ID or image information (Image_03 to Image_12) of the wizard screen.

Then, the controller 11 receives the input of the setting values or the agreement to the terms from the user (step S150). The controller 11 stores the received setting values in the storage 19. The setting values set on the respective wizard screens are collectively stored when a Finish button B16 is selected on the end confirmation screen related to ID "13". However, the setting values related to the date and time setting set on the date and time setting screen of ID "03" is stored when a Next button B10 is selected on the date and time setting screen. As described above, the storage timing of the setting value set in each wizard screen can be appropriately set according to the setting values to be stored.

The controller 11 determines whether the user has selected a selection button of either a [Back] button or a [Next] button (step S160). Here, when it is determined that the [Back] button has been selected, the controller 11 returns the processing to step S140 (step S160; [Back] → step S140).

On the other hand, when it is determined that the [Next] button has been selected by the user, the controller 11 returns the processing to step S130 (step S160; [Next] → step S130).

When the processing returns to step S130 and the controller 11 determines that the reception of the input of all the setting values or the reception of the agreement to the terms has not been completed, the controller 11 displays the wizard screen related to the next ID (step S140) and repeats the processing related to step S150 to step S160.

In step S130, when it is determined that the reception of the input of all the setting values or the reception of the agreement to the terms has been completed, the controller 11 displays the end confirmation screen related to ID "13" (step S170), and ends the initial setting wizard (step S180). After the initial setting wizard has been ended, use of the apparatus is started.

### 1.2.2 Regarding Processing Related to Port Setting for Enabling Function Executor Related to Selected Function

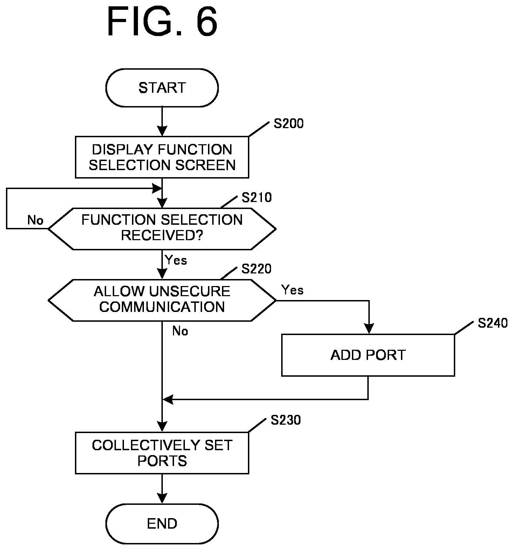

Next, processing related to port setting for enabling a function executor related to a predetermined function selected by the user will be described with reference to a flowchart of FIG. 6. The flowchart illustrated in FIG. 6 is the processing executed when the controller 11 reads the activation control program 191 (wizard setting program 1911), the control program 192, the display control program 193, the port setting program 196, and the like. The processing described with reference to FIG. 6 will be described as a processing executed as an initial setting wizard via the wizard screen related to the screen for enabling a function to be used (1/2) of ID "10" and the screen for enabling a function to be used (2/2) of ID "11" in step S150 of FIG. 5.

The controller 11 displays the screen for enabling a function to be used (1/2) of ID "10" as a selection screen for receiving a selection instruction of a function that the user desires to use (step S200).

Next, the controller 11 determines whether or not a selection instruction of a function has been received from the user via the screen for enabling a function to be used (1/2) of ID "10" (step S210). When it is determined that the selection instruction of the function is received from the user, the controller 11 determines whether or not the unsecure communication is permitted through the screen for enabling a function to be used (2/2) of ID "11" that is the next wizard screen (step S210; Yes → step S220). When it is determined that the selection instruction of the function from the user is not received, the controller 11 waits until the function is selected (step S210; No).

When it is determined that the user does not permit the unsecure communication, the controller 11 collectively sets the port settings necessary for using the function executor related to the function selected in step S210 without adding the port setting related to the unsecure communication (see FIG. 3) to the target of the collective setting (step S220; No → step S230). Then, the controller 11 ends the processing related to the port settings for enabling the selected function.

On the other hand, when it is determined that the user permits the unsecure communication, the controller 11 adds the port setting related to the unsecure communication (see FIG. 3) to the target of the collective setting and collectively sets the port settings necessary for using the function executor related to the function selected in step S210 (step S220; Yes → step S240 → step S230). Then, the controller 11 ends the processing related to the port setting for enabling the selected function.

### 1.3 Operation Example

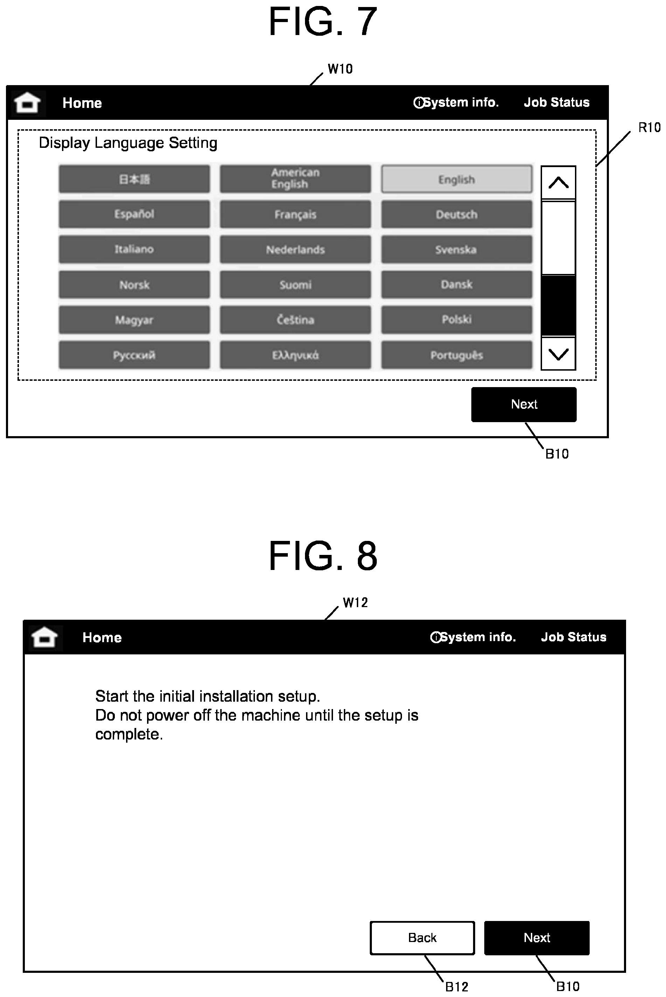

Next, an operation example according to the first embodiment will be described. In the following description, it is assumed that the same configurations are denoted by the same reference numerals. FIG. 7 is a diagram that illustrates a configuration example of the "language setting" wizard screen (screen information "Image _01") of ID "01". The "language setting" wizard screen W10 of ID "01" represents a wizard screen that the controller 11 displays in step S110 of FIG. 5. The wizard screen W10 includes a language selection area R10 and the Next button B10. The language selection area R10 is a selection area for receiving a selection instruction of language selection from the user, and is displayed in a state in which an initial value corresponding to the place of destination is selected as the language. When a desired language is selected by the user, the selected language is identifiably displayed (for example, highlighted), and the user can recognize the selected language. The Next button B10 is a selection button for receiving a determination instruction of the language selection from the user, and is actively displayed from when the wizard screen W10 is displayed. When a selection instruction of the Next button B10 is received from the user, the controller 11 transitions the screen to a wizard screen of the subsequent figure.

FIG. 8 is a diagram that illustrates a configuration example of the "start confirmation" wizard screen (screen information "Image_02") that is a start confirmation screen of ID "02". The "start confirmation" wizard screen W12 of ID "02" represents a wizard screen that the controller 11 displays in step S120 of FIG. 5. The wizard screen W12 includes a message indicating that an initial setting wizard via the wizard screen is to be started, the Next button B10, and a Back button B12. The user who has confirmed the message indicating that the initial setting wizard is to be started selects a selection button of either the Next button B10 or the Back button B12.

The Next button B10 is a selection button for receiving a confirmation instruction of the start of the initial setting wizard from the user, and is actively displayed from when the wizard screen W12 is displayed. When a selection instruction of the Next button B10 is received from the user, the controller 11 transitions the screen to a wizard screen of the subsequent figure. The Back button B12 is a selection button for receiving a cancel instruction of the initial setting wizard from the user. When a selection instruction of the Back button B12 is received from the user, the controller 11 transitions the screen to the wizard screen of the previous figure.

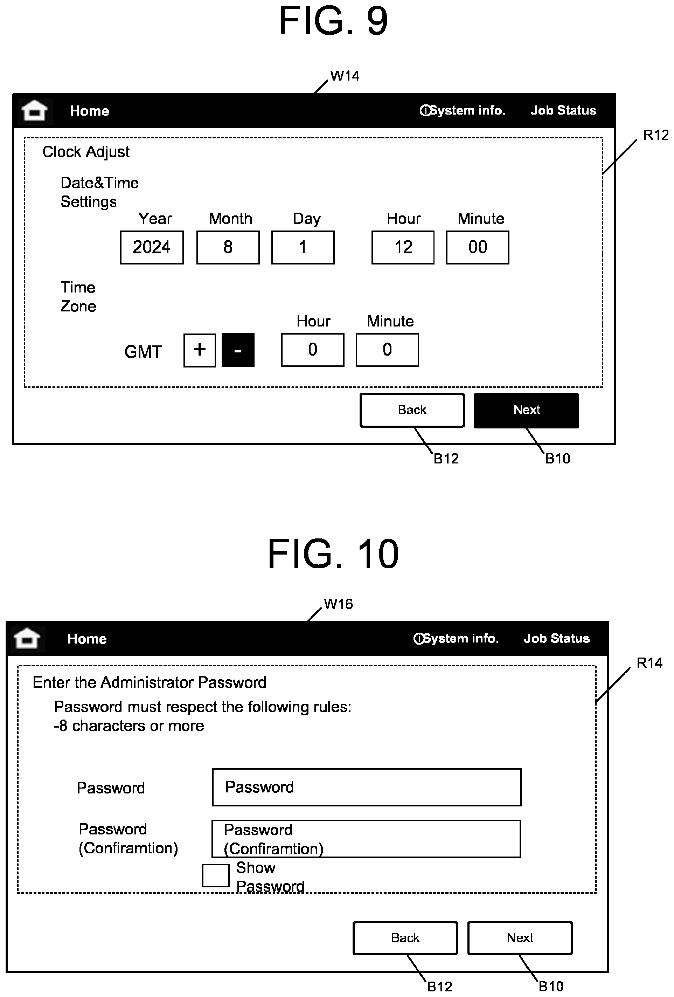

FIG. 9 is a diagram that illustrates a configuration example of the "date and time setting" wizard screen (screen information "Image_03") of ID "03". The "date and time setting" wizard screen W14 of ID "03" represents a wizard screen that the controller 11 displays in step S140 of FIG. 5. The wizard screen W14 includes a date and time setting area R12, the Next button B10, and the Back button B12. The date and time setting area R12 is a setting area for receiving the date and time setting from the user.

The Next button B10 is a selection button for receiving a determination instruction of the date and time setting from the user, and is actively displayed from when the wizard screen W14 is displayed. When a selection instruction of the Next button B10 is received from the user, the controller 11 saves the setting values set in the date and time setting area R12 in the setting information storage area 197 and transitions the screen to a wizard screen of the subsequent figure. The Back button B12 is a selection button for receiving a cancel instruction of the date and time setting from the user. When a selection instruction of the Back button B12 is received from the user, the controller 11 transitions the screen to the wizard screen of the previous figure.

FIG. 10 is a diagram that illustrates a configuration example of the ""administrator" password setting" wizard screen (screen information "Image_04") of ID "04". The ""administrator" password setting" wizard screen W16 of ID "04" represents a wizard screen that the controller 11 displays in step S140 of FIG. 5. The wizard screen W16 includes an administrator password setting area R14, the Next button B10, and the Back button B12. The administrator password setting area R14 is a setting area for receiving the setting of an administrator password from the user. The administrator password setting area R14 includes two input boxes (one for confirmation) for receiving an input of a password from the user and a Show Password check box for receiving a display instruction of an input value in the input box. When the user desires to confirm the password input in the input box, the user can check the Show Password check box to display the input value in the input box so that the user can input (set) the password while confirming the input value.

When a desired password is set (input) in the administrator password setting area R14 by the user, the Next button B10 becomes active, and the Next button B10 can be selected.

The Next button B10 is a selection button for receiving a determination instruction of the administrator password setting from the user. When a selection instruction of the Next button B10 is received from the user, the controller 11 verifies the two passwords (one for confirmation) input in the administrator password setting area R14, verifies whether the two passwords match and the password length and password creation rules according to various legal regulations are satisfied. When there is no problem in the verification result, the controller 11 transitions the screen to the wizard screen of the subsequent figure. The Back button B12 is a selection button for receiving a cancel instruction for the administrator password setting from the user, is actively displayed from when the wizard screen W16 is displayed, and can be selected regardless of whether or not a password is input in the administrator password setting area R14. When a selection instruction of the Back button B12 is received from the user, the controller 11 transitions the screen to the wizard screen of the previous figure.

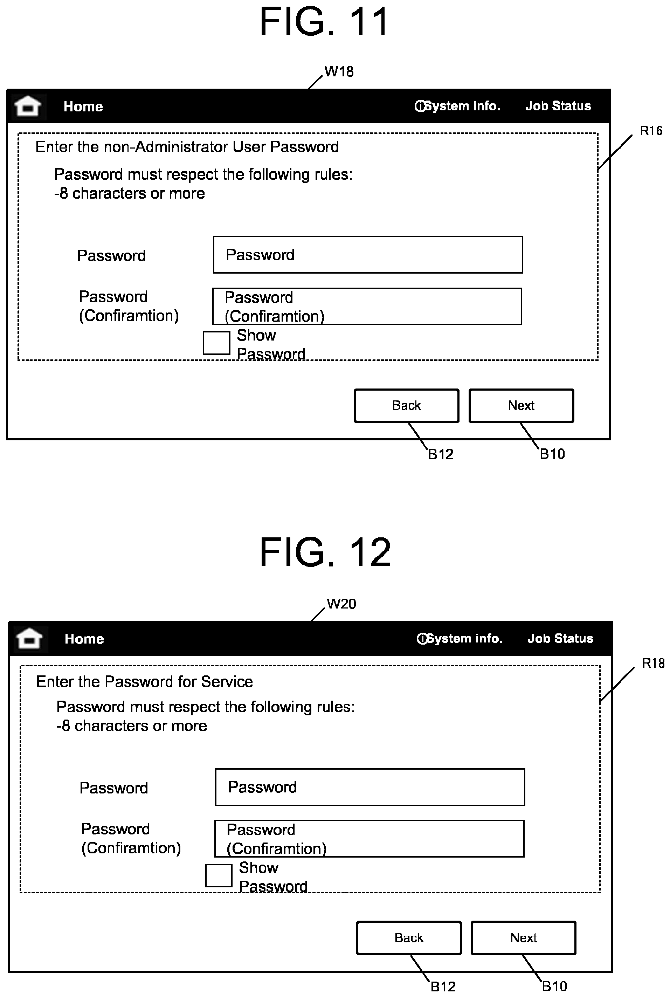

FIG. 11 is a diagram that illustrates a configuration example of the ""user" password setting" wizard screen (screen information "Image_05") of ID "05". The ""user" password setting" wizard screen W18 of ID "05" represents a wizard screen that the controller 11 displays in step S140 of FIG. 5. The wizard screen W18 includes a user password setting area R16, the Next button B10, and the Back button B12. The user password setting area R16 is a setting area for receiving the setting of a user password from the user. The user password setting area R16 includes two input boxes (one for confirmation) for receiving an input of a password from the user and a Show Password check box for receiving a display instruction of an input in the input box. When the user desires to confirm the password input in the input box, the user can check the Show Password check box to display the input value in the input box so that the user can input (set) the password while confirming the input value.

When a desired password is set in the user password setting area R16 by the user, the Next button B10 becomes active, and the Next button B10 can be selected.

The Next button B10 is a selection button for receiving a determination instruction of the user password setting from the user. When a selection instruction of the Next button B10 is received from the user, the controller 11 verifies the two passwords (one for confirmation) input in the user password setting area R16, verifies whether the two passwords match and the password length and password creation rules according to various legal regulations are satisfied. When there is no problem in the verification result, the controller 11 transitions the screen to the wizard screen of the subsequent figure. The Back button B12 is a selection button for receiving a cancel instruction for the user password setting from the user, is actively displayed from when the wizard screen W18 is displayed, and can be selected regardless of whether or not a password is input in the user password setting area R16. When a selection instruction of the Back button B12 is received from the user, the controller 11 transitions the screen to the wizard screen of the previous figure.

FIG. 12 is a diagram that illustrates a configuration example of the ""service" password setting" wizard screen (screen information "Image_06") of ID "06". The ""service" password setting" wizard screen W20 of ID "06" represents a wizard screen that the controller 11 displays in step S140 of FIG. 5. The wizard screen W20 includes a service password setting area R18, the Next button B10, and the Back button B12. The service password setting area R18 is a setting area for receiving setting of a service password for a maintenance worker (service engineer) of the image forming apparatus 100 from the user. The service password setting area R18 includes two input boxes (one for confirmation) for receiving an input of a password from the user and a Show Password check box for receiving a display instruction of an input value in the input box. When the user desires to confirm the password input in the input box, the user can check the Show Password check box to display the input value in the input box so that the user can input (set) the password while confirming the input value.

When a desired password is set in the service password setting area R18 by the user, the Next button B10 becomes active, and the Next button B10 can be selected.

The Next button B10 is a selection button for receiving a determination instruction of the service password setting from the user. When a selection instruction of the Next button B10 is received from the user, the controller 11 verifies the two passwords (one for confirmation) input in the service password setting area R18, verifies whether the two passwords match and the password length and password creation rules according to various legal regulations are satisfied. When there is no problem in the verification result, the controller 11 transitions the screen to the wizard screen of the subsequent figure. The Back button B12 is a selection button for receiving a cancel instruction for the service password setting from the user, is actively displayed from when the wizard screen W20 is displayed, and can be selected regardless of whether or not a password is input in the service password setting area R18. When a selection instruction of the Back button B12 is received from the user, the controller 11 transitions the screen to the wizard screen of the previous figure.

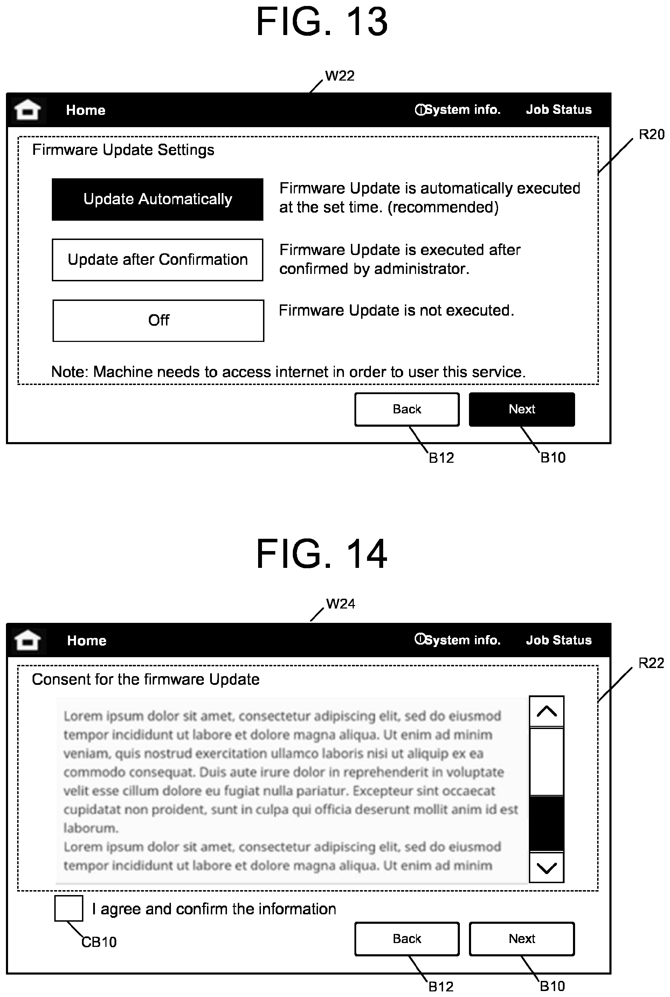

FIG. 13 is a diagram that illustrates a configuration example of the "firmware update setting" wizard screen (screen information "Image_07") of ID "07". The "firmware update setting" wizard screen W22 of ID "07" represents a wizard screen that the controller 11 displays in step S140 of FIG. 5. The wizard screen W22 includes a firmware setting area R20, the Next button B10, and the Back button B12. The firmware setting area R20 is a setting area for receiving a setting of a (remote) firmware from the user, and is displayed in a state in which an initial value corresponding to the place of destination is selected as the firmware setting. When a desired firmware setting is selected by the user, the selected firmware setting is identifiably displayed (for example, highlighted), and the user can recognize the selected firmware setting. In a case in which the setting of firmware update has been completed by, for example, a dealer, before an image forming apparatus is delivered to the user, the image forming apparatus may be controlled such that the "firmware update setting" screen is not included in the setting screen of the initial setting wizard to be executed at the time of delivery to the user.

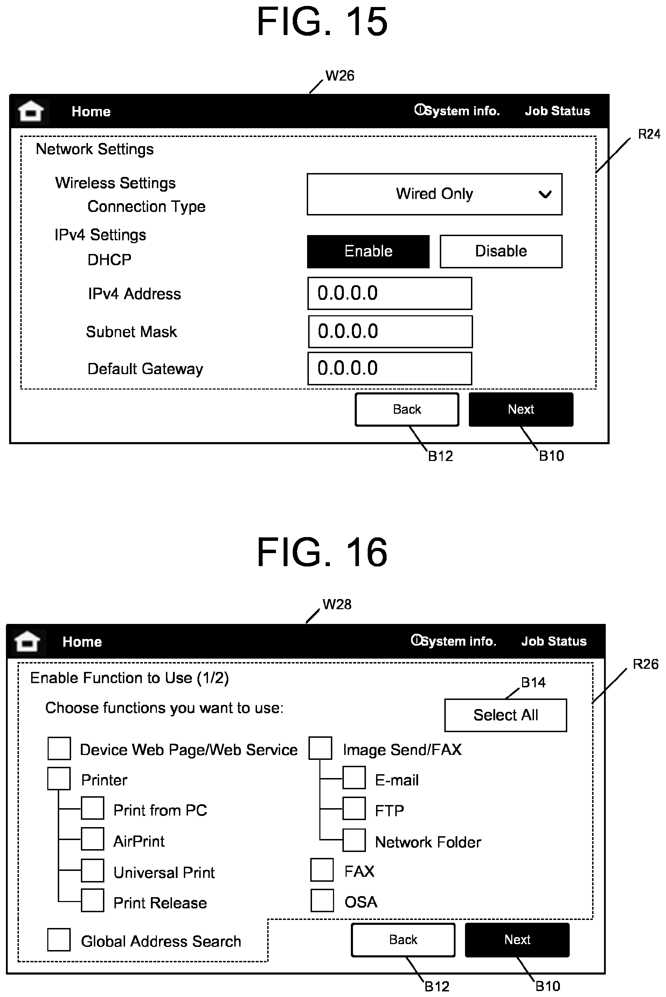

The Next button B10 is a selection button for receiving a determination instruction of the firmware setting selected from the user, and is actively displayed from when the wizard screen W22 is displayed. When a selection instruction of the Next button B10 is received from the user, the controller 11 transitions the screen to a wizard screen of the subsequent figure. The Back button B12 is a selection button for receiving a cancel instruction of the firmware setting from the user. When a selection instruction of the Back button B12 is received from the user, the controller 11 transitions the screen to the wizard screen of the previous figure. When the setting of firmware update is selected to be disabled (Off) by the user, the controller 11 omits the display of the "firmware update agreement" wizard screen described in the subsequent figure (FIG. 14) in response to the reception of the selection instruction of the Next button B10, and transitions the screen to the "network setting" wizard screen described in FIG. 15.

FIG. 14 is a diagram that illustrates a configuration example of the "firmware update agreement" wizard screen (screen information "Image_08") of ID "08". The "firmware update agreement" wizard screen W24 of ID "08" represents a wizard screen that the controller 11 displays in step S140 of FIG. 5. The wizard screen W24 includes an agreement display area R22, a check box CB10, the Next button B10, and the Back button B12. The agreement display area R22 may be configured to display the contents of agreement related to the firmware update. The check box CB10 is a check box for setting agreement (with check)/disagreement (without check) to the agreement content related to the firmware update displayed in the agreement display area R22.

The Next button B10 is a selection button for receiving an agreement instruction to agree to the firmware update from the user. When the check box CB10 is checked, the Next button B10 becomes active and can be selected. When a selection instruction of the Next button B10 is received from the user, the controller 11 transitions the screen to a wizard screen of the subsequent figure. The Back button B12 is a selection button for receiving a cancel instruction of the agreement to the firmware update from the user. When a selection instruction of the Back button B12 is received from the user, the controller 11 transitions the screen to the wizard screen of the previous figure.

FIG. 15 is a diagram that illustrates a configuration example of the "network setting" wizard screen (screen information "Image_09") of ID "09". The "network setting" wizard screen W26 of ID "09" represents a wizard screen that the controller 11 displays in step S140 of FIG. 5. The wizard screen W26 includes a network setting area R24, the Next button B10, and the Back button B12. The network setting area R24 is a setting area for receiving a setting of network from the user, and is displayed in a state in which "Wired Only" is selected as an initial value of "Connection Type". When the image forming apparatus 100 has a wireless function, a pull-down menu for enabling selection of "Connection Type" is displayed. When the image forming apparatus 100 does not have a wireless function, "Wired Only" is fixedly displayed as "Connection Type". In the network setting area R24, Dynamic Host Configuration Protocol (DHCP) is also displayed in a state in which an initial value (for example, "Enable") is set. When a desired network setting is selected and set by the user, the selected and set network setting is identifiably displayed (for example, highlighted), and the user can recognize the selected and set network setting.

The Next button B10 is a selection button for receiving a determination instruction of the network setting selected and set from the user, and is actively displayed from when the wizard screen W26 is displayed. When a selection instruction of the Next button B10 is received from the user, the controller 11 transitions the screen to a wizard screen of the subsequent figure. The Back button B12 is a selection button for receiving a cancel instruction of the network setting from the user. When a selection instruction of the Back button B12 is received from the user, the controller 11 transitions the screen to the wizard screen of the previous figure.

FIG. 16 is a diagram that illustrates a configuration example of the "enabling of function to be used" wizard screen (screen information "Image_10") of ID "10". The "enabling of function to be used (1/2)" wizard screen W28 of ID "10" represents a selection screen displayed as a wizard screen that the controller 11 displays in step S140 of FIG. 5. The wizard screen W28 includes an enabled function selection area R26, the Next button B10, the Back button B12, and an all-select (Select All) button B14. The enabled function selection area R26 is a selection area for receiving a selection instruction of a function that the user desires to use. FIG. 16 is an example in which Web page/Web service, printer (print from personal computer, AirPrint (registered trademark), Universal Print, print release), global address search, image transmission (E-mail, FTP, shared folder), fax, and Open System Architecture (OSA) are displayed as function executors related to functions selectable by the user.

When a selection instruction of a function desired to be used is received from the user, the controller 11 checks the check box corresponding to the function, sets the function to a selected state, and sets the Next button B10 to a selectable state. An all-select button B14 may be provided so that all functions displayed in the enabled function selection area R26 can be collectively selected. When the functions displayed in the enabled function selection area R26 are set to the all-selected state, the all-select button B14 may be switched to an all-cancel button for collectively canceling the all-selected state and setting the all-canceled state. The all-cancel button may be switched to the all-select button B14 in response to the function displayed in the enabled function selection area R26 being in the all-selected state.

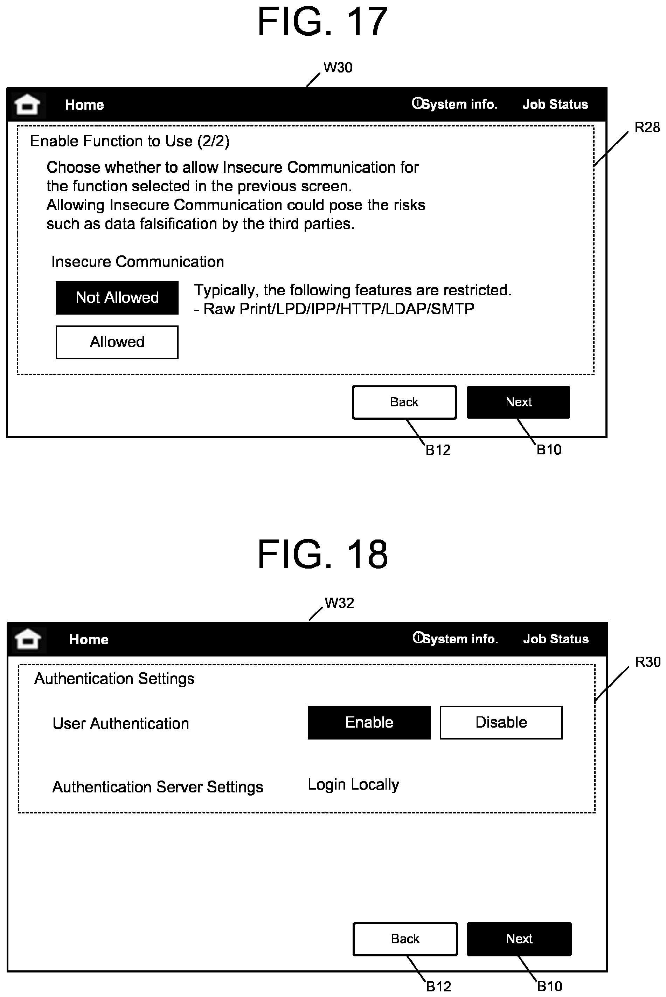

The Next button B10 is a selection button for receiving a determination instruction of the function selected from the user, and is actively displayed from when the wizard screen W28 is displayed. When a selection instruction of the Next button B10 is received from the user, the controller 11 transitions the screen to a wizard screen of the subsequent figure. The Back button B12 is a selection button for receiving a cancel instruction of the enabling of the function from the user. When a selection instruction of the Back button B12 is received from the user, the controller 11 transitions the screen to the wizard screen of the previous figure. When any of the functions in the enabled function selection area R26 is selected by the user, the controller 11 may omit the display of the "enabling of function to be used" wizard screen (2/2) described in the subsequent figure (FIG. 17) and transitions the screen to the "user authentication setting" wizard screen described in FIG. 18 in response to the reception of the selection instruction of the Next button B10.

FIG. 17 is a diagram that illustrates a configuration example of the "enabling of function to be used" wizard screen (screen information "Image_11") of ID "11". The "enabling of function to be used (2/2)" wizard screen W30 of ID "11" represents a wizard screen as a selection screen that the controller 11 displays in step S140 of FIG. 5. The wizard screen W30 includes a enabling permission area R28, the Next button B10, and the Back button B12. The enabling permission area R28 is a selection area for receiving a selection instruction of enabling or disabling of [unsecure communication] from the user. When the unsecure communication is not permitted (disabled), the user selects "Not Allowed". On the other hand, when the unsecure communication is permitted (enabled), the user selects "Allowed". When the selection instruction of the "Not Allowed" from the user is received, the controller 11 does not add the port setting related to the unsecure communication to the target of the collective setting, and sets the port setting necessary for using the function executor determined in the "enabling of function to be used" wizard screen W28 as the target of the collective setting. On the other hand, when the selection instruction of the "Allowed" from the user is received, the controller 11 adds the port setting related to the unsecure communication to the target of the collective setting in addition to the port setting necessary for using the function executor determined in the "enabling of function to be used" wizard screen W28. As illustrated in FIG. 17, functions (for example, Raw Print, LPD, IPP, HTTP, LDAP, SMTP, and the like) that are restricted when "Not Allowed" is selected by the user may be listed.

The Next button B10 is a selection button for receiving a determination instruction of the collective setting target related to the port settings, and is actively displayed from when the wizard screen W30 is displayed. When a selection instruction of the Next button B10 is received from the user, the controller 11 transitions the screen to a wizard screen of the subsequent figure. The Back button B12 is a selection button for receiving a cancel instruction of the enabling of the function from the user. When a selection instruction of the Back button B12 is received from the user, the controller 11 transitions the screen to the wizard screen of the previous figure.

FIG. 18 is a diagram that illustrates a configuration example of the "user authentication setting" wizard screen (screen information "Image_12") of ID "12". The "user authentication setting" wizard screen W32 of ID "12" represents a wizard screen that the controller 11 displays in step S140 of FIG. 5. The wizard screen W32 includes a user authentication setting area R30, the Next button B10, and the Back button B12. The user authentication setting area R30 is a setting area for receiving a user authentication setting, and is displayed in a state in which "Enable" is selected as an initial value of the user authentication setting. When a desired user authentication setting is selected by the user, the selected user authentication setting is identifiably displayed (for example, highlighted), and the user can recognize the selected user authentication setting.

The Next button B10 is a selection button for receiving a determination instruction of the user authentication setting selected from the user, and is actively displayed from when the wizard screen W32 is displayed. When a selection instruction of the Next button B10 is received from the user, the controller 11 transitions the screen to a wizard screen of the subsequent figure. The Back button B12 is a selection button for receiving a cancel instruction of the user authentication setting from the user. When a selection instruction of the Back button B12 is received from the user, the controller 11 transitions the screen to the wizard screen of the previous figure.

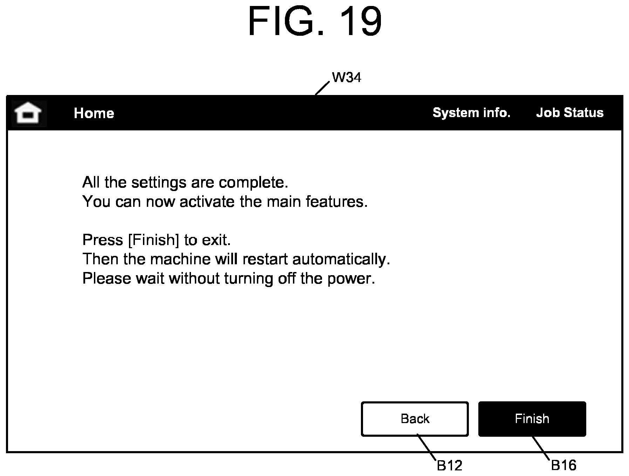

FIG. 19 is a diagram that illustrates a configuration example of the "end confirmation" wizard screen (screen information "Image_13") that is an end confirmation screen of ID "13". The "end confirmation" wizard screen W34 of ID "13" represents a wizard screen related to the end confirmation that the controller 11 displays in step S170 of FIG. 5. The wizard screen W34 includes a message indicating that the initial setting wizard is to be ended, a Finish button B16, and the Back button B12. The user who has confirmed the message indicating that the initial setting wizard is to be ended selects a selection button of either the Finish button B16 or the Back button B12.

The Finish button B16 is a selection button for receiving a confirmation instruction of the end of the initial setting wizard from the user, and is actively displayed from when the wizard screen W34 is displayed. When a selection instruction of the Finish button B16 is received from the user, the controller 11 ends the initial setting wizard. The Back button B12 is a selection button for receiving an instruction to cancel end of the initial setting wizard from the user. When a selection instruction of the Back button B12 is received from the user, the controller 11 transitions the screen to the wizard screen of the previous figure.

When the initial setting wizard is ended, the controller 11 applies each setting value received on each wizard screen as the initial setting (apparatus setting) of the image forming apparatus 100. In particular, the controller 11 collectively sets the ports for the port settings of the collective setting target for using the functions determined to be used in the "enabling of function to be used (1/2)" wizard screen W28 and the "enabling of function to be used (2/2)" wizard screen W30.

In the first embodiment, after the completion of the initial setting wizard, in a normal operation state of the image forming apparatus 100, it is possible to display, via the system setting screen, a confirmation screen on which it is possible to confirm setting contents (enabled state/disabled state of function) at the time of the initial setting wizard, and a port setting status based on the setting contents. Note that these may be displayed only when the deployment destination (place of destination) of the image forming apparatus 100 is a specific place of destination such as a country or an area under the system of the Security Enforcement Act. Further, when the security state of the image forming apparatus 100 is in a specific security state (for example, a security state higher than normal), the display may be restricted.

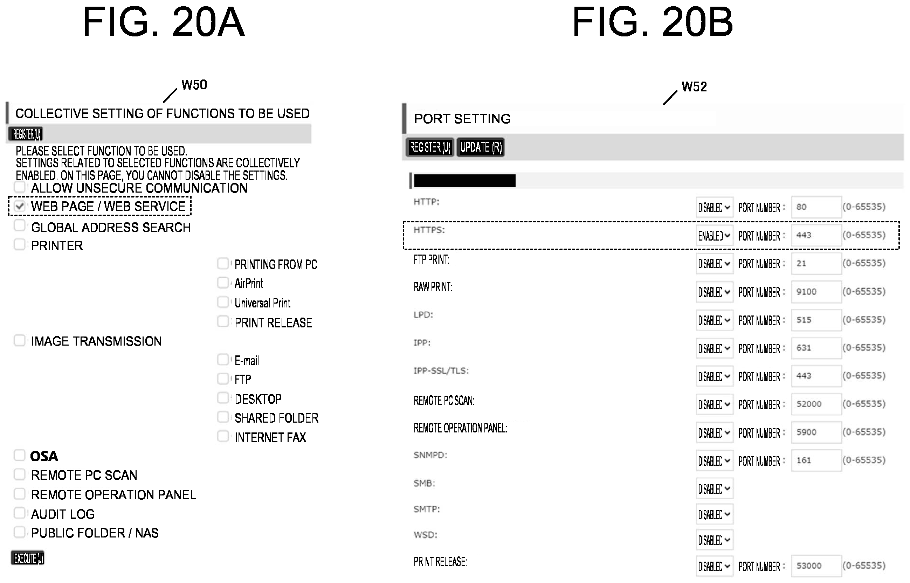

For example, FIG. 20A illustrates an example of a display configuration of a confirmation screen W50 indicating enabling/disabling of a function. The confirmation screen W50 is configured to be able to display substantially the same display content as the display content in the enabled function selection area R26 of the "enabling of function to be used (1/2)" wizard screen W28. The check box as the selector provided for each function indicates the enabling/disabling of the function executor related to the function, and indicates whether or not the function is the target of the collective setting of the port setting. In FIG. 20A, the state in which "Web page/Web service" as the function is set to be enabled as the function used at the time of the initial setting wizard is illustrated (dotted line frame in the figure). When a function (for example, "Web page/Web service") set at the time of the initial setting wizard is to be disabled, the function can be disabled by unchecking the check box. As described above, the check box provided for each function is also a selector for switching enabling or disabling of a predetermined function received via the selection screen.

On the other hand, FIG. 20B is an example of a display configuration of a port setting screen W52 showing a setting state of ports. FIG. 20B illustrates port settings (server port) used by a function executor related to a "Web page/Web service" function illustrated in FIG. 20A when the function is enabled.

Each port illustrated in FIG. 20B is provided with a pull-down menu indicating an enabled state/disabled state of the port and a port number to be applied. As illustrated in FIG. 3 and the like, the port settings of the "Web page/Web service" is HTTP (*1) and HTTPS. In addition, as illustrated in FIG. 20A, since "allow unsecure communication" is disabled, only HTTPS is in the enabled state and "443" is set as the port number (dotted line frame in FIG. 20A) in the port settings related to "Web page/Web service".

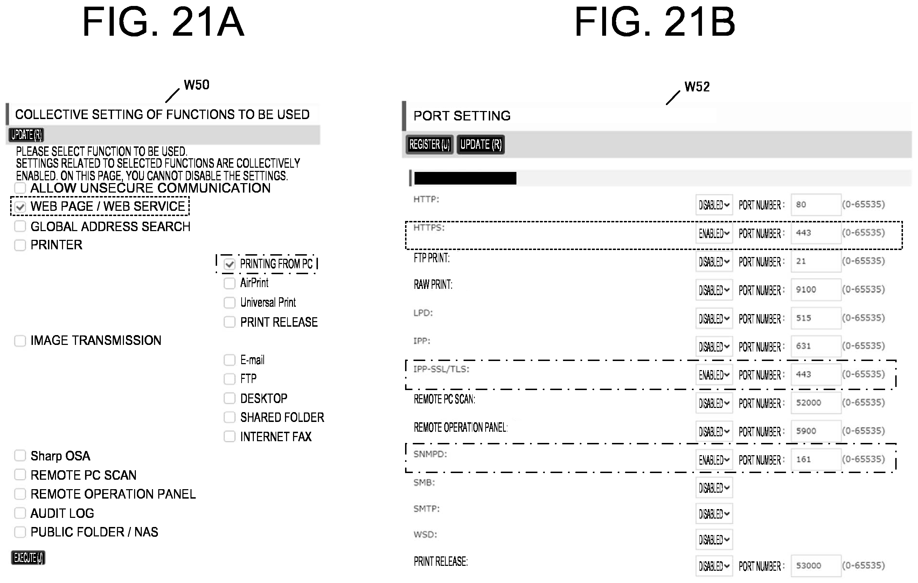

On the confirmation screen W50 illustrated in FIG. 20A, it is possible to select (enable) another function different from the function selected at the time of the initial setting wizard. For example, FIG. 21A illustrates a state in which, in addition to "Web page/Web service", a check box of "printing from PC" of the printer is checked on the confirmation screen W50, and the function is added (chain line in the figure).

FIG. 21B illustrates a state in which the port setting (IPP-SSL/TLS, SNMPD) related to "printing from PC" is enabled in conjunction with the selection (enabling) of the function, and the port numbers "443" (IPP-SSL/TLS) and "161" (SNMPD) are set for the respective ports (chain lines in the figure). As described above, since each port is provided with a pull-down menu for setting the enabled state/disabled state of the port, the enabled state/disabled state of the port can be appropriately set and changed.

Note that the respective ports that are collectively set to the enabled state in conjunction with the selection (enabling) of the function can be individually disabled, but there is a possibility that the respective ports are used by another function. Therefore, in the confirmation screen W50, it is preferable that the ports cannot be collectively disabled when the selection of the function is canceled.

Since the setting in the initial setting (at the time of initial installation) can be regarded as the initial state of the image forming apparatus 100, it is not necessary to record the setting in an audit log for the purpose of the information leakage countermeasure.

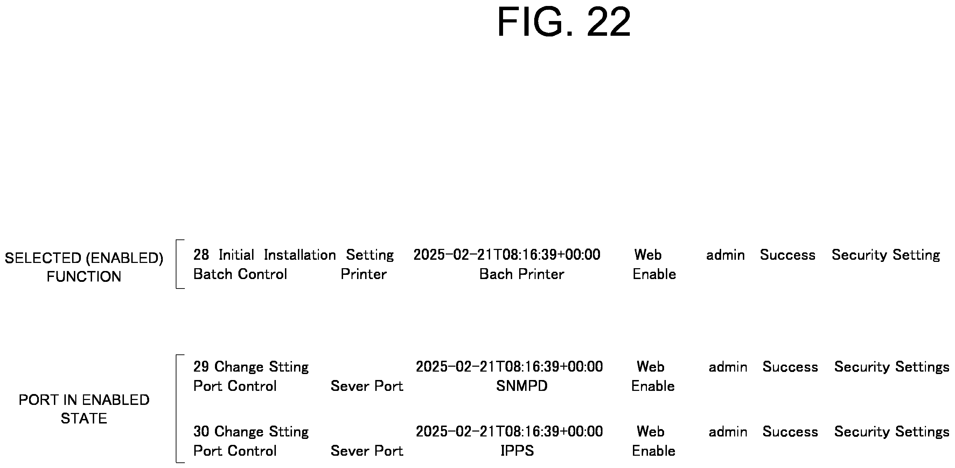

On the other hand, since the function selected (enabled) via the system setting screen such as the confirmation screen W50 illustrated in FIG. 20 and the setting related to each port set to the enabled state correspond to the setting change of the image forming apparatus 100, for example, as illustrated in FIG. 22, it is desirable to record the selected (enabled) function and the setting related to each port set to the enabled state in conjunction with to the selection (enabling) of the function as an audit log. In this case, a port (setting) that is redundantly used for a plurality of functions may be recorded only once for reducing the recording to a minimum.

As described above, according to the first embodiment, it is possible to provide a communication apparatus and the like capable of more easily enabling a function to be used without being conscious of a port setting to be used in a function executor related to the function while complying with the security strengthening law.

### 2. Second Embodiment

The second embodiment is a mode in which it is possible to use a function (collective setting of functions to be used) of collectively setting ports to be used in accordance with selection (enabling) of functions to an enabled state only in a specific state such as compliance with the security strengthening law.

Since an apparatus function (configuration), a processing flow, and the like according to the second embodiment are substantially the same as those of the first embodiment, descriptions thereof are omitted. Whether or not the collective setting of the functions to be used can be used may be set in advance via a system setting screen (not shown) in accordance with the place of destination of the image forming apparatus 100. For example, in the language setting in the initial setting wizard, the place of destination may be estimated from the selected language setting to determine whether or not the collective setting of the functions to be used can be used.

### 2.1 Operation Example

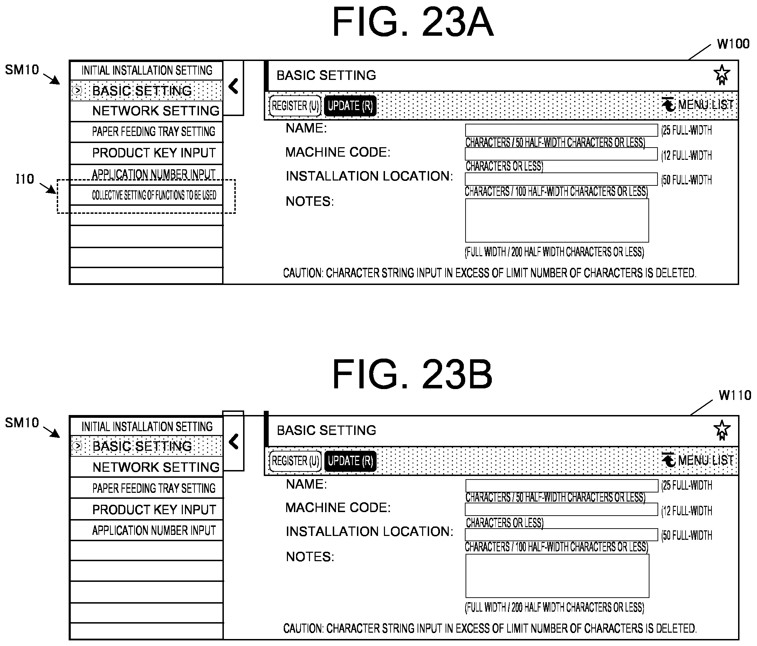

FIG. 23A illustrates an example of a display configuration of a system setting screen W100 when the collective setting of the functions to be used is available, and FIG. 23B illustrates an example of a display configuration of a system setting screen W110 when the collective setting of the functions to be used is unavailable. FIG. 23A and FIG. 23B illustrate an example in which setting items related to the initial installation setting are displayed in a setting item menu SM10 on the system setting screen.

Since the system setting screen W100 illustrated in FIG. 23A is an example that correspond to a specific state of complying with the security strengthening law, a setting item I10 related to the collective setting of the functions to be used is displayed in the setting item menu SM10.

On the other hand, since the system setting screen W110 illustrated in FIG. 23B is an example that does not correspond to a specific state of complying with the security strengthening law, displaying of the setting item I10 related to the collective setting of the functions to be used is restricted in the setting item menu SM10.

In a specific state such as being compliant with the security strengthening law, one or more ports related to the use of the function executor are set to a disabled state in the initial setting (at the time of initial installation), and therefore, in particular, a setting screen composed of a web page or the like cannot be displayed. Therefore, in order to make it easy to enable the functions via the display 13 (operation inputter 15) of the image forming apparatus 100, it is preferable to make the collective setting of the functions to be used available.

On the other hand, in a case in which it does not correspond to a specific state such as being compliant with the security strengthening law, there is a low possibility that one or more ports related to the use of the function executor are set to a disabled state. Therefore, even when the collective setting of the functions to be used is unavailable, the operability of the user is less affected.

As described above, according to the second embodiment, in addition to the effects of the first embodiment, it is possible to efficiently and flexibly enable a function that a user desires to use by controlling whether or not the collective setting of functions to be used can be used in accordance with a specific state such as being compliant with the security strengthening law.

The present disclosure is not limited to the embodiments described above, and various modifications may be made thereto. That is, the technical scope of the present disclosure also includes embodiments that may be obtained by combining technical measures modified as appropriate without departing from the gist of the present disclosure.

Although some parts of the above-described embodiments are separately described for convenience of explanation, it is needless to say that the embodiments may be combined and implemented within a technically allowable range.

In the present specification, the description including the term "in a case in which" or "when" describes an example, and the configuration is not limited to the described content. A configuration other than the configuration described with the term "in a case in which" or "when" is also disclosed within the scope obvious to those skilled in the art, and it is intended to acquire the right to such a configuration.

The program that operates on each apparatus in the foregoing embodiments is a program that controls the CPU or the like (program that causes a computer to function) so as to implement the functions according to the foregoing embodiments. Information that is handled by these apparatus is temporarily accumulated in a temporary storage device (for example, RAM) during processing, is then stored in various storage devices such as read only memory (ROM) and an HDD, and is read, corrected, and written by the CPU as needed.

A non-transitory computer-readable recording medium that records a program in an information processing apparatus may be, for example, any of a semiconductor medium (for example, ROM and a non-volatile memory card), an optical recording medium/magneto-optical recording medium (for example, Digital Versatile Disc (DVD)), a Magneto Optical Disc (MO), a Mini Disc (MD), a Compact Disc (CD), and a Blu-ray (registered trademark) Disc (BD)), and a magnetic recording medium (for example, a magnetic tape and a flexible disk). In this case, the program recorded in the recording medium is read by a computer of the information processing apparatus and executed by the computer, so that not only the functions of the above-described embodiments are realized, but also the functions of the present disclosure are realized by processing in cooperation with an operating system, another application program, or the like on the basis of an instruction of the program.

When the program is distributed in the market, the program can be stored in a portable recording medium and distributed, or can be transferred to a server computer connected via a network such as the Internet. In this case, it is needless to say that a storage device of the server computer is also included in the present disclosure.

Further, each functional block or various features of the device used in the above-described embodiments can be implemented or executed by an electric circuit, such as an integrated circuit or a plurality of integrated circuits. An electrical circuit designed to implement the functions described herein may include a general-purpose processor, a digital signal processor (DSP), an application-specific integrated circuit (ASIC), a field programmable gate array (FPGA), or other programmable logic devices, discrete gates or transistor logic, discrete hardware components, or a combination thereof. The general-purpose processor may be a microprocessor or may be a conventional processor, one or more controllers, a microcontroller, or a state machine. The electrical circuit described above may be composed of a digital circuit or an analog circuit. Furthermore, when an integrated circuit technology that replaces the current integrated circuits appears due to the progress of the semiconductor technology, one or more aspects of the present disclosure can use a new integrated circuit according to the technology.

### REFERENCE SIGNS LIST

11 controller
13 display
15 operation inputter
17 communicator
19 storage
191 activation control program
1911 wizard setting program
192 control program
193 display control program
194 job control program
195 application program
196 port setting program
197 setting information storage area
21 image processor
211 image former
213 image inputter
100 image forming apparatus
101 control apparatus
103 communication apparatus
105 image processing apparatus
107 printing apparatus

## Claims

1. A communication apparatus (103, 100) comprising:
one or more controllers (11) configured to:
control enabling or disabling of a predetermined function;
execute the predetermined function by performing communication via one or more ports set for the predetermined function; and
collectively set the one or more ports to be used for executing the predetermined function when the predetermined function is enabled.

2. The communication apparatus (103, 100) according to claim 1, further comprising:
a display (13), wherein
the one or more controllers (11):
display, on the display (13), a selection screen that receives selection of the predetermined function to be enabled, and
collectively set the one or more ports to be used for executing the predetermined function on a basis of the selection of the predetermined function via the selection screen.

3. The communication apparatus (103, 100) according to claim 2, wherein
the one or more controllers (11):
display the selection screen on the display (13) as an initial setting screen at a time of an initial setting.

4. The communication apparatus (103, 100) according to claim 3, wherein
the one or more controllers (11):
display, on the display (13), a confirmation screen in which the predetermined function received via the selection screen can be confirmed, after the initial setting is ended.

5. The communication apparatus (103, 100) according to claim 4, wherein
the confirmation screen includes:
a selector that switches between enabling and disabling of the predetermined function received via the selection screen.

6. The communication apparatus (103, 100) according to claim 4, wherein
the one or more controllers (11):
receive, via the confirmation screen, a selection of an other function different from the predetermined function received when the initial setting is conducted, and
collectively set the one or more ports to be used for executing the other function on a basis of a selection of the other function via the confirmation screen.

7. The communication apparatus (103, 100) according to claim 1, wherein
the one or more controllers (11):
restrict collective disabling of the one or more ports to be used for executing the predetermined function.

8. The communication apparatus (103, 100) according to claim 3, wherein
the one or more controllers (11):
receive selection of the predetermined function via the initial setting screen when the communication apparatus (103, 100) is in a specific state complying with a security strengthening law.

9. A control method for a communication apparatus that executes a predetermined function by performing communication via one or more ports set for the predetermined function,
wherein, collectively setting the one or more ports to be used for executing the predetermined function when the predetermined function is enabled.
